(19) Europäisches Patentamt
European Patent Office
Office européen des brevets

(11) EP 3 828 215 B1

(12) EUROPEAN PATENT SPECIFICATION

(45) Date of publication and mention of the grant of the patent:
**13.09.2023 Bulletin 2023/37**

(21) Application number: **20209995.8**

(22) Date of filing: **26.11.2020**

(51) International Patent Classification (IPC):
***C08G 18/44*** *(2006.01)* ***C08G 64/02*** *(2006.01)*

(52) Cooperative Patent Classification (CPC):
(C-Sets available)
**C08G 18/44; C08G 18/0852; C08G 18/10; C08G 18/246; C08G 18/3228; C08G 18/3234; C08G 18/7671; C08G 64/0208; C08G 64/305; C09D 175/02; C09D 175/06** (Cont.)

# (54) POLYUREA RESIN

POLYHARNSTOFFHARZ

RÉSINE DE POLYURÉE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2019 JP 2019213054**

(43) Date of publication of application:
**02.06.2021 Bulletin 2021/22**

(73) Proprietor: **Asahi Kasei Kabushiki Kaisha**
**Tokyo 1000006 (JP)**

(72) Inventors:
- **MASUBUCHI, Tetsuo**
  **Tokyo 100-0006 (JP)**
- **OOTANI, Tetsuya**
  **Tokyo 100-0006 (JP)**

(74) Representative: **Strehl Schübel-Hopf & Partner**
**Maximilianstrasse 54**
**80538 München (DE)**

(56) References cited:
**EP-A1- 1 371 675**
**US-A1- 2015 291 724**
**US-A1- 2017 073 466**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08G 18/10, C08G 18/3228;**
**C08G 18/10, C08G 18/3234**

## Description

### Technical Field

The present invention relates to a polyurea resin.

### Background Art

Polyurethane resins and polyurea resins have been conventionally used for a wide variety of fields including synthetic leathers, artificial leathers, adhesives, coating materials for furniture, and coating materials for automobiles, and polyether or polyester is used therefor as a polyol component to be reacted with isocyanate (e.g. see Patent Documents 1 and 2). In recent years, however, there have been increasing demands on resistance of resins such as thermal resistance, weatherability, hydrolysis resistance, mold resistance, and oil resistance, at a higher level.

A polycarbonate diol formed from 1,6-hexanediol is commercially available as a soft segment superior in hydrolysis resistance, light resistance, resistance to oxidative degradation, thermal resistance, and so on, and this exhibits such characteristics because carbonate bonds in the polymer chain are extremely chemically stable. However, the polycarbonate diol formed from 1,6-hexanediol is solid and highly crystalline at normal temperature, and hence has a disadvantage that thermoplastic polyurethanes to be obtained therefrom are poor in flexibility. For the purpose of improving flexibility of thermoplastic polyurethanes to be obtained, for example, Patent Document 3 proposes a polycarbonate diol formed by copolymerization of 1,6-hexanediol and 1,4-butanediol. For example, Patent Document 4 proposes a copolymer-type polycarbonate diol formed from 1,6-hexanediol and 1,5-pentanediol. Thermoplastic polyurethanes obtained by using these copolymer-type polycarbonate diols are superior not only in flexibility but also in low-temperature properties, and have been attracting attention in recent years.

For example, Patent Document 5 proposes a polycarbonate diol produced from 1,3-propanediol as a primary diol starting material, and a thermoplastic polyurethane. The polycarbonate diol produced from 1,3-propanediol as a primary diol starting material is liquid and amorphous at normal temperature, and hence thermoplastic polyurethanes to be obtained therefrom are superior in flexibility. In addition, such thermoplastic polyurethanes have high carbonate group density, and thus have the characteristic of superiority in wear resistance and chemical resistance.

### List of Prior Art Documents

### Patent Document

Patent Document 1: Japanese Patent Laid-Open No. 2000-95836
Patent Document 2: Japanese Patent Laid-Open No. 2001-123112
Patent Document 3: Japanese Patent Laid-Open No. 5-51428
Patent Document 4: Japanese Patent Laid-Open No. 6-49166
Patent Document 5: International Publication No. WO 2002/070584

US 2017/073466 A1 discloses a polyurethane obtained from a polycarbonate diol obtained using a 1,10-decanediol and another diol compound. US 2015/291724 A1 discloses a polycarbonate diol for producing polyurethanes, wherein the polycarbonate diol is obtained using a C3-C5-diol and a C8-C20-diol.

### Summary of Invention

### Problems to be Solved by Invention

However, thermoplastic polyurethanes obtained by using a copolymer-type polycarbonate diol obtained from 1,6-hexanediol and 1,4-butanediol or 1,5-pentanediol as disclosed in Patent Documents 3 and 4 have room for improvement with respect to wear resistance and chemical resistance.

In the thermoplastic polyurethanes described in Patent Document 5, the high carbonate group density of the polycarbonate diol used results in low molecular mobility, thus giving room for improvement with respect to flexibility, and also leads to increased glass transition temperature, which may cause problems also with low-temperature properties.

In view of these, an object of the present invention is to provide a polyurea resin superior in flexibility, strength, wear resistance, chemical resistance, and low-temperature properties, which cannot be achieved by thermoplastic polyurethanes obtained by using conventional polycarbonate diols.

Means for Solving Problems

The present inventors have conducted diligent studies, consequently found that a combination of a specific organic polyisocyanate compound, a polycarbonate diol having a specific structure, and a specific chain extender provides a polyurea resin that can solve the above problems, and completed the present invention.

Specifically, the present invention is set out in the appended claims.

Advantages of Invention

The present invention can provide a polyurea resin superior in flexibility, strength, wear resistance, chemical resistance, and low-temperature properties.

Mode for Carrying Out Invention

Hereinafter, the mode for carrying out the present invention (hereinafter, referred to as the "present embodiment") will be described in detail. The present invention is not limited by the description below and can be carried out with various modification or changes made therein without departing from the spirit of the present invention.

[Polyurea Resin]

The polyurea resin of the present embodiment is a reaction product of polyisocyanate compound (a), polycarbonate diol (b), and chain extender (c), wherein

polyisocyanate compound (a) is an organic polyisocyanate compound having an average number of isocyanate groups in one molecule of 2.5 or less,
polycarbonate diol (b) comprises repeating units each represented by the following formula (1), defined more specifically below, and terminal hydroxyl groups,
the carbonate group content of one molecule of polycarbonate diol (b) is 41.5 to 45.7% by mass and the number-average molecular weight of polycarbonate diol (b) is 900 to 3100 g/mol, and
chain extender (c) is a diamine:

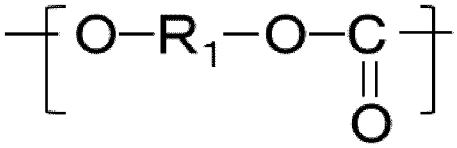
(1)

wherein $R_1$ represents a divalent aliphatic or alicyclic hydrocarbon having 2 to 20 carbon atoms.

The polyurea resin of the present embodiment is superior in flexibility, strength, wear resistance, chemical resistance, and low-temperature properties by virtue of the combination of the specific organic polyisocyanate compound, the polycarbonate diol having the specific structure, and the specific chain extender.

<Polyisocyanate Compound (a)>

Component (a) used for the polyurea resin of the present embodiment is an organic polyisocyanate compound having less than 2.5 isocyanate groups in one molecule. Specific examples of such organic polyisocyanate compounds include, but are not limited to, known aromatic diisocyanates such as 2,4-tolylene diisocyanate, 2,6-tolylene diisocyanate, a mixture of them (TDI), diphenylmethane-4,4'-diisocyanate (MDI), naphthalene-1,5-diisocyanate (NDI), 3,3'-dimethyl-4,4'-biphenylene diisocyanate, crude TDI, polymethylene polyphenyl isocyanate, and crude MDI; known aralicyclic diisocyanates such as xylylene diisocyanate (XDI) and phenylene diisocyanate; known aliphatic diisocyanates such as 4,4'-methylenebiscyclohexyl diisocyanate (hydrogenated MDI), hexamethylene diisocyanate (HDI), isophorone diisocyanate (IPDI), and cyclohexane diisocyanate (hydrogenated XDI); and isocyanurated products, carbodiimidated products, and biureted products of those isocyanates. Especially, it is preferable that polyisocyanate compound (a) used in the present embodiment be an alicyclic polyisocyanate. If polyisocyanate compound (a) is an alicyclic polyisocyanate, polyurea resins to be obtained tend to be superior in strength, wear resistance, and chemical resistance. From the viewpoint of strength and wear resistance of polyurea resins to be obtained, in particular, diphenylmethane-4,4'-diisocyanate (MDI), hexamethylene diisocyanate (HDI), isophorone diisocyanate (IPDI), and 4,4'-methylenebiscyclohexyl diisocyanate (hydrogenated MDI) are preferred, and among them isophorone diisocyanate (IPDI) and 4,4'-methylenebiscyclohexyl diisocyanate (hydrogenated MDI) are particularly preferred because of the superiority in weatherability.

The average number of isocyanate groups in one molecule of the organic polyisocyanate compound is preferably 1.9 to 2.5 and more preferably 2.0 to 2.3.

In the present embodiments, the average number of isocyanate groups in one molecule (average number of functional groups) of the organic polyisocyanate compound can be determined from the isocyanate group content ratio (% by mass) determined in accordance with a method described in JIS K7301-1995 and the number-average molecular weight of the organic polyisocyanate determined in measurement of the polystyrene-based number-average molecular weight with a gel permeation chromatograph (GPC) by using the following expression.

$$\text{Average number of functional groups} = \text{Number-average molecular weight of organic polyisocyanate} \times \text{Isocyanate group content ratio (\% by mass)} / 100\% / 42$$

Specific analysis procedures for the isocyanate group content ratio and number-average molecular weight of the organic polyisocyanate are as follows.

(Physical Property 1) Isocyanate Group Content Ratio

Measurement of the isocyanate group content ratio of a polyisocyanate composition as a sample is performed in accordance with a method described in JIS K7301-1995 (Testing methods for tolylene diisocyanate type prepolymers for thermosetting urethane elastomers). The following shows a more specific method for measuring the isocyanate group content ratio.

(1) Into a 200-mL Erlenmeyer flask, 1 g of the sample is taken, and 20 mL of toluene is added to the flask to dissolve the sample.
(2) Thereafter, 20 mL of 2.0 N di-n-butylamine/toluene solution is added to the flask, and the resultant is left to stand for 15 minutes.
(3) To the flask, 70 mL of 2-propanol is added to dissolve, and thus a solution is obtained.
(4) The solution obtained in (3) is titrated with 1 mol/L hydrochloric acid to determine the sample titer.
(5) Further, titration is performed in the same manner as in (1) to (3) without addition of the sample to determine the blank titer.

From the sample titer and blank titer determined above, the isocyanate group content ratio is calculated by using the following calculation method.

$$\text{Isocyanate group content ratio (\% by mass)} = (\text{Blank titer} - \text{Sample titer}) \times 42 / [\text{Mass (g) of sample} \times 1{,}000] \times 100\%$$

(Physical Property 2) Number-Average Molecular Weight of Organic Polyisocyanate

For the number-average molecular weight of a polyisocyanate including a modified polyisocyanate part and a nonreacted polyisocyanate part in a polyisocyanate composition as a sample, the polystyrene-based number-average molecular weight is measured by using a gel permeation chromatograph (GPC) with the following apparatus and conditions.

Apparatus: HLC-8120GPC (product name) manufactured by Tosoh Corporation
Column: TSKgel SuperH1000 (product name) × 1, TSKgel SuperH2000 (product name) × 1, TSKgel SuperH3000 (product name) × 1, each manufactured by Tosoh Corporation Carrier: tetrahydrofuran
Detection method: differential refractometer

(Physical Property 3) Average Number of Isocyanate Functional Groups

The average number of isocyanate functional groups of a polyisocyanate composition as a sample is the number of isocyanate functional groups possessed by one molecule of the polyisocyanate in a statistical sense, and calculated as follows from the number-average molecular weight of the organic polyisocyanate measured in (Physical Property 2) and the isocyanate group content ratio measured in (Physical Property 1).

Average number of functional groups = Number-average molecular weight of organic polyisocyanate × Isocyanate group content ratio (% by mass) / 100% / 42

<Polycarbonate Diol (b)>

Polycarbonate diol (b) used in the polyurea resin of the present embodiment comprises repeating units each represented by formula (1) and terminal hydroxyl groups, and the carbonate group content of one molecule of polycarbonate diol (b) is 41.5 to 45.7% by mass and the number-average molecular weight of polycarbonate diol (b) is 900 to 3100 g/mol:

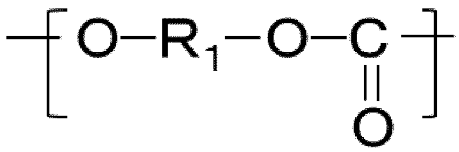

(1)

wherein $R_1$ represents a divalent aliphatic or alicyclic hydrocarbon having 2 to 20 carbon atoms.

The diol as a starting material in producing polycarbonate diol (b) is not limited to a particular diol, and, for example, one or two or more diols can be selected for use from diols without any side chain such as ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, and 1,14-tetradecanediol; diols with a side chain such as 2-methyl-1,8-octanediol, 2-ethyl-1,6-hexanediol, 2-methyl-1,3-propanediol, 3-methyl-1,5-pentanediol, 2,4-dimethyl-1,5-pentanediol, 2,4-diethyl-1,5-pentanediol, 2-butyl-2-ethyl-1,3-propanediol, and 2,2-dimethyl-1,3-propanediol; and cyclic diols such as 1,4-cyclohexanedimethanol and 2-bis (4-hydroxycyclohexyl)-propane.

In addition, a small amount of a compound having three or more hydroxyl groups in one molecule, such as trimethylolethane, trimethylolpropane, hexanetriol, and pentaerythritol, can be used. If an excessively large amount of such a compound having three or more hydroxyl groups in one molecule is used, gelation due to crosslinking may occur during polymerization reaction for the polycarbonate. Accordingly, the amount of the compound having three or more hydroxyl groups in one molecule is preferably 0.01 to 5% by mass and more preferably 0.01 to 1% by mass based on the total amount of aliphatic and/or alicyclic diols.

The polycarbonate diol (b) to be used in the present invention is a polycarbonate diol obtained from 1,4-butanediol and 1,6-hexanediol as starting materials. Specifically, the polycarbonate diol (b) is a polycarbonate diol in which the fraction of repeating units each derived from 1,4-butanediol and represented by formula (2) among repeating units each represented by formula (1) is 20 mol% or more, more preferably 20 mol% or more and 90 mol% or less, and even more preferably 35 mol% or more and 65 mol% or less, and the fraction of repeating units each derived from 1,6-hexanediol and represented by formula (3) among repeating units each represented by formula (1) is 20 mol% or more, more preferably 20 mol% or more and 90 mol% or less, and even more preferably 35 mol% or more and 65 mol% or less:

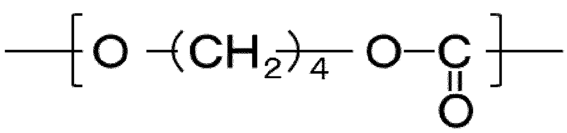

(2)

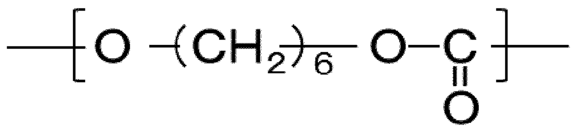 (3)

Any method may be used without limitation for producing polycarbonate diol (b) to be used in the present embodiment. For example, polycarbonate diol (b) can be produced by using any of various methods described in Schnell, Polymer Reviews, vol. 9, pp. 9-20 (1994).

An example of such production methods is as follows, but is not limited thereto: a carbonate starting material described later and a diol starting material described above are mixed together, and reacted under normal pressure or reduced pressure in the presence of a transesterification catalyst at 100 to 200°C, and a generated alcohol derived from the carbonate starting material is removed to obtain a low-molecular-weight polycarbonate diol, which is then heated under reduced pressure at 160 to 250°C to remove a nonreacted part of the carbonate starting material and diol and simultaneously condense the low-molecular-weight polycarbonate diol to obtain a polycarbonate diol with a predetermined molecular weight.

Examples of the carbonate starting material to be used for synthesis of polycarbonate diol (b) to be used in the present embodiment include, but are not limited to, dialkyl carbonates such as dimethyl carbonate, diethyl carbonate, dipropyl carbonate, and dibutyl carbonate; diaryl carbonates such as diphenyl carbonate; and alkylene carbonates such as ethylene carbonate, trimethylene carbonate, 1,2-propylene carbonate, 1,2-butylene carbonate, 1,3-butylene carbonate, and 1,2-pentylene carbonate. One or two or more carbonates can be selected from these to use as a starting material. From the viewpoints of availability and ease of setting conditions for polymerization reaction, use of dimethyl carbonate, diethyl carbonate, ethylene carbonate, propylene carbonate, diphenyl carbonate, or dibutyl carbonate is more preferred.

Production of polycarbonate diol (b) to be used in the present embodiment is performed typically with addition of a catalyst. Any catalyst can be freely selected from common transesterification catalysts as a catalyst for use in the present embodiment. Used is, for example, a metal such as lithium, sodium, potassium, rubidium, cesium, magnesium, calcium, strontium, barium, zinc, aluminum, titanium, cobalt, germanium, tin, lead, antimony, arsenic, and cerium; a salt; an alkoxide; or an organic compound. Particularly preferred is a compound of titanium, tin, or lead. The amount of usage of the catalyst is typically 0.00001 to 0.1% based on the mass of the polycarbonate diol.

The carbonate group content of one molecule of polycarbonate diol (b) used for the polyurea resin of the present embodiment is 41.5 to 45.7% by mass, more preferably 42.2 to 44.3% by mass, and even more preferably 42.8 to 43.8% by mass.

The carbonate group content is the amount of carbonate groups in one molecule of the polycarbonate diol, and specifically determined by the following expression (I):

Carbonate group content (%) = (Molecular weight of carbonate group) × (Number of repeating units in one molecule) / (Number-average molecular weight of polycarbonate diol) × 100 (I)

wherein the molecular weight of a carbonate group (-O-C=O-O-) is 60.01.

If the carbonate group content of one molecule of the polycarbonate diol is equal to or more than the above lower limit, the chemical resistance and wear resistance of polyurea resins to be obtained increase. If the carbonate group content of one molecule of the polycarbonate diol is equal to or less than the above upper limit or less, the flexibility and low-temperature properties of polyurea resins to be obtained increase.

In the present embodiment, the carbonate group content of one molecule of the polycarbonate diol can be measured in accordance with a method described later in Examples.

The number-average molecular weight of polycarbonate polyol (b) to be used in the present embodiment is 900 to 3100 g/mol, preferably 1400 to 2600 g/mol, and more preferably 1800 to 2200 g/mol. If the number-average molecular weight of the polycarbonate polyol is equal to or more than the lower limit, the flexibility of polyurea resins to be obtained increases. If the number-average molecular weight of the polycarbonate polyol is equal to or less than the upper limit, the wear resistance and chemical resistance of polyurea resins to be obtained increase.

Examples of methods for controlling the number-average molecular weight of polycarbonate polyol (b) within

the above range can include, but are not limited to, a method in which a carbonate starting material and a diol starting material are mixed together, and reacted under normal pressure or reduced pressure in the presence of a transesterification catalyst at 100 to 200°C, and a generated alcohol derived from the carbonate starting material is removed to obtain a low-molecular-weight polycarbonate diol, which is then heated under reduced pressure at 160 to 250°C to remove a nonreacted part of the carbonate starting material and diol and simultaneously condense the low-molecular-weight polycarbonate diol to obtain a polycarbonate diol with a predetermined molecular weight. Here, the number-average molecular weight of the polycarbonate diol can be adjusted with the amount of the diol distilled off through condensation of the low-molecular-weight polycarbonate diol.

In the present embodiment, the number-average molecular weight of polycarbonate polyol (b) can be measured in accordance with a method described later in Examples.

<Chain Extender (c)>

Chain extender (c) to be used for the polyurea resin of the present embodiment is a diamine. Specific examples thereof include, but are not limited to, diamines such as ethylenediamine, propylenediamine, hexamethylenediamine, tolylenediamine, xylylenediamine, diphenyldiamine, diaminodiphenylmethane, 4,4'-methylenebis(cyclohexylamine), piperazine, isophoronediamine (IPDA), and 3,3'-dichloro-4,4'-diaminodiphenylmethane (MOCA). In order to obtain polyurea resins superior in tensile break strength, wear resistance, chemical resistance, and weatherability, alicyclic diamines are more preferred as chain extender (c), and specifically 4,4'-methylenebis(cyclohexylamine), isophoronediamine (IPDA), and 3,3'-dichloro-4,4'-diaminodiphenylmethane (MOCA) are preferred.

<Method for Synthesizing Polyurea Resin>

Used as a method for synthesizing the polyurea resin of the present embodiment is a method of simultaneously reacting the three substances of polyisocyanate compound (a), polycarbonate diol (b), and chain extender (c), or a method of reacting in advance polyisocyanate compound (a) and polycarbonate diol (b) to form a prepolymer and then adding chain extender (c) for chain extension.

An additional component may be used as a synthetic starting material for the polyurea resin of the present embodiment in combination with components (a) to (c), unless the advantageous effects of the present invention are impaired, and examples thereof include carboxyl-group- and/or sulfone-group-containing polyol (d) or a salt thereof, which is described later, and known polyols.

When the three substances of polyisocyanate compound (a), polycarbonate diol (b), and chain extender (c) are simultaneously reacted, it is preferred to blend them so as to give a blend ratio of 1/0.5 to 1/1.5, as a ratio of the total equivalent of hydroxy groups in polycarbonate diol (b) and amino groups in chain extender (c) to the NCO equivalent in polyisocyanate compound (a), namely, (Total equivalent of hydroxy groups and amino groups) / NCO equivalent = 1/0.5 to 1/1.5, and it is more preferred to blend so as to give (Total equivalent of hydroxy groups and amino groups) / NCO equivalent = 1/0.8 to 1/1.2. The amount of chain extender (c) blended when the three substances of polyisocyanate compound (a), polycarbonate diol (b), and chain extender (c) are simultaneously reacted is preferably 3 to 40% by mass and more preferably 5 to 25% by mass based on the total mass of polyisocyanate compound (a) and polycarbonate diol (b).

When the method of reacting in advance polyisocyanate compound (a) and polycarbonate diol (b) to form a prepolymer and then adding chain extender (c) for chain extension is used, a prepolymer is synthesized with polycarbonate diol (b) and polyisocyanate compound (a) preferably at the blend ratio OH/NCO (equivalent ratio) = 1/1.5 to 2.5, more preferably at the blend ratio OH/NCO (equivalent ratio) = 1/1.8 to 2.2, and thereafter chain extender (c) is added for chain extension preferably at an amino group equivalent of 0.5 to 1.5, more preferably at an amino group equivalent of 0.8 to 1.2, per equivalent of NCO in the prepolymer obtained.

Synthesis with an aqueous system is also applicable as a method for synthesizing the polyurea resin of the present embodiment. Examples of methods for synthesizing a polyurea resin with an aqueous system (methods for producing an aqueous polyurea resin) include, but are not limited to, the following method. An applicable method is such that, in the presence or absence of an organic solvent without any active-hydrogen-containing group in the molecule (e.g., acetone, methyl ethyl ketone, tetrahydrofuran, N,N-dimethylformamide), a prepolymer is synthesized with organic polyisocyanate compound (a) including two or more isocyanate groups in one molecule, polycarbonate diol (b), and carboxyl-group- and/or sulfone-group-containing polyol (d) or a salt thereof preferably at the blend ratio OH/NCO (equivalent ratio) = 1/1.5 to 2.5, more preferably at the blend ratio OH/NCO (equivalent ratio) = 1/1.8 to 2.2, the prepolymer is dispersed in water, and a diamine as chain extender (c) is then added to form an aqueous polyurea dispersion. Alternatively, a method is applicable such that the reaction solution obtained is added into water with stirring to disperse, and the solvent is then removed, as necessary, to obtain an aqueous polyurea dispersion.

Carboxyl-group- and/or sulfone-group-containing polyol (d) or a salt thereof is a component to be used for introduction of a carboxylate group or sulfonate group for the purpose of allowing a water-dispersible polyurea to self-emulsify in water, and of imparting dispersion stability to an aqueous polyurea dispersion. Examples of carboxyl-group-containing polyols include, but are not limited to, 2,2-dimethylolpropionic acid (DMPA), 2,2-dimethylolbutanoic acid, 2,2-dimethylolheptanoic acid, and 2,2-dimethyloloctanoic acid. Examples of sulfone-group-containing polyols include sulfonic acid diols {3-(2,3-dihydroxypropoxy)-1-propanesulfonic acid}, sulfamic acid diols {N,N-bis(2-hydroxyethyl)sulfamic acid}, and alkylene oxide adducts thereof. Examples of salts of these carboxyl-group- and/or sulfone-group-containing polyols include, but are not limited to, ammonium salts, amine salts [salts of primary amines (primary monoamines such as methylamine, ethylamine, propylamine, and octylamine), salts of secondary monoamines (dimethylamine, diethylamine, and dibutylamine), and salts of tertiary monoamines (aliphatic tertiary monoamines such as trimethylamine, triethylamine, triethanolamine, N-methyldiethanolamine, and N,N-dimethylethanolamine; heterocyclic tertiary monoamines such as N-methylpiperidine and N-methylmorpholine; and aromatic-ring-containing tertiary monoamines such as benzyldimethylamine, $\alpha$-methylbenzyldimethylamine, and N-dimethylaniline), wherein each amine has 1 to 12 carbon atoms], alkali metal (sodium, potassium, and lithium cations) salts, and combinations of two or more of them.

The amount of carboxyl-group- and/or sulfone-group-containing polyol (d) or a salt thereof is preferably such that the amount of carboxyl groups and/or sulfone groups is 0.01 to 10% by mass based on the mass of the polyurea resin. The amount of carboxyl-group- and/or sulfone-group-containing polyol (d) or a salt thereof is such that the amount of carboxyl groups and/or sulfone groups is more preferably 0.1 to 7% by mass and even more preferably 0.5 to 5% by mass based on the mass of the polyurea resin. If the amount of carboxyl groups and/or sulfone groups is 0.01% by mass or more based on the mass of the polyurea resin, the emulsion stability tends to be superior. If the amount of carboxyl groups and/or sulfone groups is 10% by mass or less based on the mass of the polyurea resin, the water resistance of coating films to be obtained tends to be superior.

A known polyol may be further used in combination with polycarbonate diol (b) to be used in the present embodiment, unless the advantageous effects of the present invention are impaired. Examples of known polyols include known polyols of polyesters, polyethers, and so on described in Imai, Yoshio, Polyurethane Foam, The Society of Polymer Science, Japan, 1987, pp. 12-23.

A conventionally-known technique for urea formation reaction is used as a method for producing the polyurea resin of the present embodiment. For example, the polyurea resin of the present embodiment can be formed by reacting polycarbonate diol (b), polyisocyanate compound (a), and chain extender (c) at normal temperature to 200°C.

In the production, known polymerization catalysts, for example, as typified by tertiary amins and organometal salts of tin, titanium, and so on [e.g., described in Iwata, Keiji, "Polyurethane Resin", Nikkan Kogyo Shimbun, Ltd., pp. 23-32 (1969)] can be used. The reaction may be performed with a solvent, and examples of preferred solvents include dimethylformamide, diethylformamide, dimethylacetamide, dimethyl sulfoxide, tetrahydrofuran, methyl isobutyl ketone, dioxane, cyclohexanone, benzene, toluene, and ethyl cellosolve.

In producing the polyurea resin of the present embodiment, compounds including only one active hydrogen that reacts with isocyanate groups can be used as an end terminator, and examples thereof include monohydric alcohols such as ethyl alcohol and propyl alcohol; primary amines such as n-propylamine, n-butylamine, n-pentylamine, and n-hexylamine; and secondary amines such as diethylamine and di-n-propylamine.

Preferred examples of additives to be used in the present embodiment include stabilizers such as thermal stabilizers and photostabilizers. Examples of applicable thermal stabilizers include, but are not limited to, phosphorus compounds such as aliphatic, aromatic, or alkyl-group-substituted aromatic phosphates or phosphites or hypophosphite derivatives, phenylphosphonic acid, phenylphosphinic acid, diphenylphosphonic acid, polyphosphonate, dialkylpentaerythritol diphosphite, and dialkylbisphenol A diphosphite; phenolic derivatives, in particular, hindered phenol compounds; sulfur-containing compounds such as thioether-based compounds, dithioate-based compounds, mercaptobenzimidazole-based compounds, thiocarbanilide-based compounds, and thiodipropionates; and tin-based compounds such as tin malate and dibutyltin monoxide.

Preferred as a hindered phenol compound are Irganox 1010 (product name: manufactured by Ciba-Geigy AG), Irganox 1520 (product name: manufactured by Ciba-Geigy AG), and so on. Preferred as a phosphorus-based compound as a secondary antiaging agent are PEP-36, PEP-24G, and HP-10 (product names: all manufactured by Asahi Denka Co., Ltd.), and Irgafos 168 (product name: manufactured by Ciba-Geigy AG). Preferred as a sulfur compound are thioether compounds such as dilauryl thiopropionate (DLTP) and distearyl thiopropionate (DSTP).

Examples of photostabilizers include, but are not limited to, benzotriazole-based compounds and benzophenone-based compounds. Radical-scavenging photostabilizers such as hindered amine compounds are also preferably used.

One of those stabilizers may be used singly, and two or more of them may be used in combination. The loading of such a stabilizer is preferably 0.01 to 5 parts by mass, more preferably 0.1 to 3 parts by mass, and even more preferably 0.2 to 2 parts by mass, based on 100 parts by mass of the polyurea resin.

In addition, a plasticizer may be added to the polyurea resin of the present embodiment, as necessary. Examples of such plasticizers include, but are not limited to, phthalates such as dioctyl phthalate, dibutyl phthalate, diethyl phthalate, butylbenzyl phthalate, di-2-ethylhexyl phthalate, diisodecyl phthalate, diundecyl phthalate, and diisononyl phthalate;

phosphates such as tricresyl phosphate, triethyl phosphate, tributyl phosphate, tri-2-ethylhexyl phosphate, trimethylhexyl phosphate, tris-chloroethyl phosphate, and tris-dichloropropyl phosphate; fatty acid esters such as trimellitic acid octyl ester, trimellitic acid isodecyl ester, trimellitates, dipentaerythritol esters, dioctyl adipate, dimethyl adipate, di-2-ethylhexyl azelate, dioctyl azelate, dioctyl sebacate, di-2-ethylhexyl sebacate, and methylacetyl ricinoleate; pyromellitates such as pyromellitic acid octyl ester; epoxy-based plasticizers such as epoxydated soybean oil, epoxydated linseed oil, and epoxydated fatty acid alkyl esters; polyether-based plasticizers such as adipic acid ether ester and polyethers; liquid rubbers such as liquid NBR, liquid acrylic rubber, and liquid polybutadiene; and nonaromatic paraffin oils.

One of those plasticizers can be used singly, and two or more of them can be used in combination. An appropriate loading according to required hardness and physical properties is selected for the plasticizer, and the loading is preferably 0 to 50 parts by mass per 100 parts by mass of the polyurea resin.

Moreover, an inorganic filler, a lubricant, a coloring agent, a silicone oil, a foaming agent, a flame retardant, and so on may be added to the polyurea resin of the present embodiment. Examples of such inorganic fillers include, but are not limited to, calcium carbonate, talc, magnesium hydroxide, mica, barium sulfate, silicic acid (white carbon), titanium oxide, and carbon black.

<Applications>

The polyurea resin of the present embodiment is superior in various physical properties, and hence can be used for injection-molded members (such as holding members, steering wheels, airbag covers, watch belts) and extruded products (such as hoses, tubes, sheets), and can be used in a state dissolved in a solvent for binders for synthetic leathers, skin materials, surface treatment agents, coating materials for fibers, various surface treatment agents, various adhesives, and so on. In particular, it is preferred to use the polyurea resin of the present embodiment for synthetic leathers.

<Polyurea Resin Film>

The polyurea resin film of the present embodiment is a polyurea resin film having a thickness of 10 μm to 500 μm and obtained by forming the above-described polyurea resin into a film.

Specific examples of the polyurea resin film of the present embodiment include, but are not limited to, extruded films of the above-described polyurea resin, and cast films such that the above-described polyurea resin is dissolved in a solvent, applied, and dried in use. The polyurea resin film of the present embodiment is superior in flexibility, strength, wear resistance, chemical resistance, and low-temperature properties, and hence is preferably used particularly for skin materials and surface treatment agents for synthetic leathers.

Examples

Hereinafter, the present embodiments will be described in more detail by using Examples and so on; however, the present embodiments are by no means limited to the examples. Analysis procedures and evaluation of physical properties performed for Examples and Comparative Examples were in accordance with the following test methods.

<Evaluation Methods for Polycarbonate Diol>

1) Hydroxyl Number of Polycarbonate Diol (Average Hydroxyl Number)

The hydroxyl number of a polycarbonate diol was measured in accordance with JIS K1557-1.

2) Number-Average Molecular Weight (Mn) of Polycarbonate Diol

The hydroxyl number of a polycarbonate diol was determined in accordance with JIS K1557-1, and the number-average molecular weight (Mn) of the polycarbonate diol was calculated by using the following expression (II) .

$$\text{Number-average molecular weight (Mn)} = 56.1 \times 2 \times 1000 / \text{Hydroxyl number} \quad \text{(II)}$$

3) Composition of Polycarbonate Diol (Copolymerization Ratio)

Into a 100-mL eggplant flask, 1 g of a sample of a polycarbonate diol was taken, and 30 g of ethanol and 4 g

of potassium hydroxide were put therein, and the resultant was reacted at 100°C for 1 hour. The reaction solution was cooled to room temperature, two or three drops of phenolphthalein, as an indicator, were then added thereto, and the reaction solution was neutralized with hydrochloric acid. The neutralized solution was cooled in a refrigerator for 1 hour, a salt precipitated was then removed through filtration, and the filtrate was analyzed by using GC (gas chromatography). In the GC analysis, quantitative analysis of components was performed by using the gas chromatograph GC-14B (manufactured by Shimadzu Corporation, Japan) equipped with a DB-WAX (manufactured by J&W Scientific, U.S.A.) as a column with diethylene glycol diethyl ester as an internal standard and a flame ionization detector (FID) as a detector. The temperature-increasing profile for the column was such that the temperature was retained at 60°C for 5 minutes and then increased to 250°C at 10°C/min.

From the analysis result, the mole ratio among alcohols detected was determined and the composition (copolymerization ratio) of the polycarbonate diol was determined.

4) Carbonate Group Content of Polycarbonate Diol

The carbonate group content is the amount of carbonate groups in one molecule of a polycarbonate diol, and was specifically determined with the following expression (III):

$$\text{Carbonate group content (\%)} = \text{(Molecular weight of carbonate group)} \times \text{(Number of repeating units in one molecule)} / \text{(Number-average molecular weight of polycarbonate diol)} \times 100 \quad \text{(III)}$$

wherein the molecular weight of a carbonate group (-O-C=O-O-) is 60.01.

On the basis of the structure of the following formula (7), the number of repeating units in one molecule (n) was determined by using the following expression (IV):

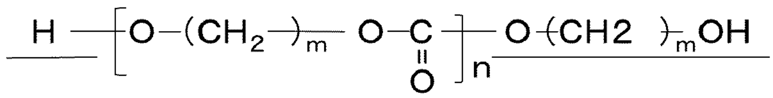

(7)

wherein m represents the average number of methylene moieties, n represents the number of repeating units in one molecule, and each underlined part indicates an end group.

From the composition of a polycarbonate diol determined in Composition of Polycarbonate Diol (Copolymerization Ratio), the structure of each segment constituting the polycarbonate diol was determined. From this, the number of methylene moieties in each constituent segment was determined, and the average number of methylene moieties (m) was calculated from the ratio.

$$\text{Number of repeating units in one molecule (n)} = \text{(Number-average molecular weight (Mn) - Molecular weights of end groups)} / \text{(Molecular weight of repeating unit)} \quad \text{(IV)}$$

<Evaluation Methods for Polyurea Resin Films>

5) Tensile Break Strength and Elongation at Break

Onto a glass sheet, N,N-dimethylformamide (DMF) solution containing 20% by mass of a polyurea resin was applied, and heated at 80°C for 2 hours to form a film with a film thickness of 40 μm. The film was left to stand at room temperature for 24 hours, and a sample with a width of 6.6 mm and a length of 60 mm was cut out of the film. In a

thermostatic chamber at 23°C, tensile break strength (MPa), elongation at break (%), and stress at 100% elongation (100% modulus: MPa) were measured for the sample film by using a Universal Testing Machine (manufactured by Zwick GmbH & Co. KG) with a chuck-to-chuck distance of 20 mm and a tensile speed of 10 mm/min. Lower stress at 100% elongation is considered to provide greater softness and thus better flexibility.

6) Chemical Resistance

A film formed in the same operation as in 5) was soaked in oleic acid at 23°C for 1 week, and thereafter the swelling rate was measured. Swelling rates were determined by using the following numerical expression (V). Lower swelling rates (%) are considered to provide superior chemical resistance.

$$\text{Swelling rate (\%)} = \{(\text{Mass after test} - \text{Mass before test}) / \text{Mass before test}\} \times 100 \quad \text{(V)}$$

7) Wear resistance

Wear resistance was measured for a film formed in the same operation as in 5) by using a Taber abraser in accordance with a method in JIS K5600-5-8. The change (mg) between the mass of a coated sheet before abrasion test and the mass of the coated sheet after abrasion test (500 rotations) was measured and recorded. Less mass change (mg) is considered to provide superior wear resistance.

8) Measurement of Low-Temperature Properties (Glass Transition Temperature)

A test piece with a width of 10 mm, a length of 40 mm, and a thickness of 0.4 mm was cut out of a film formed in the same operation as in 5). The test piece was set in a viscoelastometer (manufactured by Hitachi High-Tech Science Corporation, [TA7000 series, DMA7100]) with a chuck-to-chuck distance of 20 mm, and the viscoelasticity was measured while the temperature was increased from -100°C to 100°C at 5°C/min. A peak of tan δ was read to determine the glass transition temperature (Tg). Lower glass transition temperature (Tg) is considered to provide superior low-temperature properties.

<Method for Measuring Average Number of Isocyanate Groups in One Molecule of Organic Polyisocyanate Compound>

The average number of isocyanate groups in one molecule (average number of functional groups) of an organic polyisocyanate compound was determined from the isocyanate group content ratio (% by mass) determined in accordance with a method described in JIS K7301-1995 and the number-average molecular weight of the organic polyisocyanate determined in measurement of the polystyrene-based number-average molecular weight with a gel permeation chromatograph (GPC) by using the following expression.

$$\text{Average number of functional groups} = \text{Number-average molecular weight of organic polyisocyanate} \times \text{Isocyanate group content ratio (\% by mass)} / 100\% / 42$$

Specific analysis procedures for the isocyanate group content ratio and the number-average molecular weight of an organic polyisocyanate were as follows.

(Physical Property 1) Isocyanate Group Content Ratio

Measurement of the isocyanate group content ratio of a polyisocyanate composition as a sample was performed in accordance with a method described in JIS K7301-1995 (Testing methods for tolylene diisocyanate type prepolymers for thermosetting urethane elastomers). The following shows a more specific method for measuring the isocyanate group content ratio.

(1) Into a 200-mL Erlenmeyer flask, 1 g of the sample was taken, and 20 mL of toluene was added to the flask to dissolve the sample.

(2) Thereafter, 20 mL of 2.0 N di-n-butylamine/toluene solution was added to the flask, and the resultant was left to stand for 15 minutes.
(3) To the flask, 70 mL of 2-propanol was added to dissolve, and thus a solution was obtained.
(4) The solution obtained in (3) was titrated with 1 mol/L hydrochloric acid to determine the sample titer.
(5) Further, titration was performed in the same manner as in (1) to (3) without addition of the sample to determine the blank titer.

From the sample titer and blank titer determined above, the isocyanate group content ratio was calculated by using the following calculation method.

$$\text{Isocyanate group content ratio (\% by mass)} = \text{(Blank titer - Sample titer)} \times 42 / [\text{Mass (g) of sample} \times 1{,}000] \times 100\%$$

(Physical Property 2) Number-Average Molecular Weight of Organic Polyisocyanate

For the number-average molecular weight of a polyisocyanate including a modified polyisocyanate part and a nonreacted polyisocyanate part in a polyisocyanate composition as a sample, the polystyrene-based number-average molecular weight was measured by using a gel permeation chromatograph (GPC) with the following apparatus and conditions.

Apparatus: HLC-8120GPC (product name) manufactured by Tosoh Corporation
Column: TSKgel SuperH1000 (product name) × 1, TSKgel SuperH2000 (product name) × 1, TSKgel SuperH3000 (product name) × 1, each manufactured by Tosoh Corporation
Carrier: tetrahydrofuran
Detection method: differential refractometer

(Physical Property 3) Average Number of Isocyanate Functional Groups

The average number of isocyanate functional groups of a polyisocyanate composition as a sample is the number of isocyanate functional groups possessed by one molecule of the polyisocyanate in a statistical sense, and was calculated as follows from the number-average molecular weight of the organic polyisocyanate measured in (Physical Property 2) and the isocyanate group content ratio measured in (Physical Property 1).

$$\text{Average number of functional groups} = \text{Number-average molecular weight of organic polyisocyanate} \times \text{Isocyanate group content ratio (\% by mass)} / 100\% / 42$$

[Polymerization Example 1 for Polycarbonate Diol]

A 1-L glass flask equipped with a rectifying column packed with regular packing materials and a stirring apparatus was charged with 396 g (4.5 mol) of ethylene carbonate, 144 g (1.6 mol) of 1,4-butanediol, and 319 g (2.7 mol) of 1,6-hexanediol. Thereto, 0.09 g of titanium tetrabutoxide as a catalyst was added, and reaction was performed at a reaction temperature of 140 to 160°C for 12 hours while the pressure was decreased from 10 kPa to 2 kPa and a mixture of ethylene glycol and ethylene carbonate generated was distilled off.
Thereafter, the distillation was switched to simple distillation, and reaction was performed at 180°C with gradual reduction of pressure to 0.5 kPa for 5 hours and the monomers were distilled out to obtain a polycarbonate diol. Analysis results for the polycarbonate diol obtained are shown in Table 1. The polycarbonate polyol is referred to as PC1.

[Polymerization Example 2 for Polycarbonate Diol]

A polycarbonate diol was obtained through polymerization using the same equipment as in Polymerization

Example 1 in the same manner as in Polymerization Example 1, except that 189 g (2.1 mol) of 1,4-butanediol and 271 g (2.3 mol) of 1,6-hexanediol were used. Analysis results for the polycarbonate polyol obtained are shown in Table 1. The polycarbonate diol is referred to as PC2.

[Polymerization Example 3 for Polycarbonate Diol]

A polycarbonate diol was obtained through polymerization using the same equipment as in Polymerization Example 1 in the same manner as in Polymerization Example 1, except that 234 g (2.6 mol) of 1,4-butanediol and 236 g (2.0 mol) of 1,6-hexanediol were used. Analysis results for the polycarbonate polyol obtained are shown in Table 1. The polycarbonate diol is referred to as PC3.

[Polymerization Example 4 for Polycarbonate Diol]

A polycarbonate diol was obtained through polymerization using the same equipment as in Polymerization Example 1 in the same manner as in Polymerization Example 1, except that 279 g (3.1 mol) of 1,4-butanediol and 224 g (1.9 mol) of 1,6-hexanediol were used. Analysis results for the polycarbonate polyol obtained are shown in Table 1. The polycarbonate diol is referred to as PC4.

[Polymerization Example 5 for Polycarbonate Diol]

A 1-L glass flask equipped with a rectifying column packed with regular packing materials and a stirring apparatus was charged with 396 g (4.5 mol) of ethylene carbonate, 234 g (2.6 mol) of 1,4-butanediol, and 271 g (2.3 mol) of 1,6-hexanediol. Thereto, 0.09 g of titanium tetrabutoxide as a catalyst was added, and reaction was performed at a reaction temperature of 140 to 160°C for 12 hours while the pressure was decreased from 10 kPa to 2 kPa and a mixture of ethylene glycol and ethylene carbonate generated was distilled off.

Thereafter, the distillation was switched to simple distillation, and reaction was performed at 180°C with gradual reduction of pressure to 0.5 kPa for 2.5 hours and the monomers were distilled out to obtain a polycarbonate diol. Analysis results for the polycarbonate diol obtained are shown in Table 1. The polycarbonate polyol is referred to as PC5.

[Polymerization Example 6 for Polycarbonate Diol]

A 1-L glass flask equipped with a rectifying column packed with regular packing materials and a stirring apparatus was charged with 396 g (4.5 mol) of ethylene carbonate, 234 g (2.6 mol) of 1,4-butanediol, and 260 g (2.2 mol) of 1,6-hexanediol. Thereto, 0.09 g of titanium tetrabutoxide as a catalyst was added, and reaction was performed at a reaction temperature of 140 to 160°C for 12 hours while the pressure was decreased from 10 kPa to 2 kPa and a mixture of ethylene glycol and ethylene carbonate generated was distilled off.

Thereafter, the distillation was switched to simple distillation, and reaction was performed at 180°C with gradual reduction of pressure to 0.5 kPa for 3.5 hours and the monomers were distilled out to obtain a polycarbonate diol. Analysis results for the polycarbonate diol obtained are shown in Table 1. The polycarbonate polyol is referred to as PC6.

[Polymerization Example 7 for Polycarbonate Diol]

A 1-L glass flask equipped with a rectifying column packed with regular packing materials and a stirring apparatus was charged with 396 g (4.5 mol) of ethylene carbonate, 234 g (2.6 mol) of 1,4-butanediol, and 236 g (2.0 mol) of 1,6-hexanediol. Thereto, 0.09 g of titanium tetrabutoxide as a catalyst was added, and reaction was performed at a reaction temperature of 140 to 160°C for 12 hours while the pressure was decreased from 10 kPa to 2 kPa and a mixture of ethylene glycol and ethylene carbonate generated was distilled off.

Thereafter, the distillation was switched to simple distillation, and reaction was performed at 180°C with gradual reduction of pressure to 0.5 kPa for 8 hours and the monomers were distilled out to obtain a polycarbonate diol. Analysis results for the polycarbonate diol obtained are shown in Table 1. The polycarbonate polyol is referred to as PC7.

[Polymerization Example 8 for Polycarbonate Diol]

A 1-L glass flask equipped with a rectifying column packed with regular packing materials and a stirring apparatus was charged with 396 g (4.5 mol) of ethylene carbonate, 234 g (2.6 mol) of 1,4-butanediol, and 236 g (2.0 mol) of 1,6-hexanediol. Thereto, 0.09 g of titanium tetrabutoxide as a catalyst was added, and reaction was performed at a reaction temperature of 140 to 160°C for 12 hours while the pressure was decreased from 10 kPa to 2 kPa and a mixture of ethylene glycol and ethylene carbonate generated was distilled off.

Thereafter, the distillation was switched to simple distillation, and reaction was performed at 180°C with gradual reduction of pressure to 0.5 kPa for 10 hours and the monomers were distilled out to obtain a polycarbonate diol. Analysis results for the polycarbonate diol obtained are shown in Table 1. The polycarbonate polyol is referred to as PC8.

[Polymerization Example 9 for Polycarbonate Diol]

A 1-L glass flask equipped with a rectifying column packed with regular packing materials and a stirring apparatus was charged with 396 g (4.5 mol) of ethylene carbonate, 207 g (2.3 mol) of 1,4-butanediol, 236 g (2.0 mol) of 1,6-hexanediol, and 70 g (0.4 mol) of 1,10-decanediol. Thereto, 0.09 g of titanium tetrabutoxide as a catalyst was added, and reaction was performed at a reaction temperature of 140 to 160°C for 12 hours while the pressure was decreased from 10 kPa to 2 kPa and a mixture of ethylene glycol and ethylene carbonate generated was distilled off.

Thereafter, the distillation was switched to simple distillation, and reaction was performed at 180°C with gradual reduction of pressure to 0.5 kPa for 5 hours and the monomers were distilled out to obtain a polycarbonate diol. Analysis results for the polycarbonate diol obtained are shown in Table 1. The polycarbonate polyol is referred to as PC9.

[Polymerization Example 10 for Polycarbonate Diol]

A 1-L glass flask equipped with a rectifying column packed with regular packing materials and a stirring apparatus was charged with 396 g (4.5 mol) of ethylene carbonate, 167 g (2.2 mol) of 1,3-propanediol, and 260 g (2.2 mol) of 1,6-hexanediol. Thereto, 0.09 g of titanium tetrabutoxide as a catalyst was added, and reaction was performed at a reaction temperature of 140 to 160°C for 12 hours while the pressure was decreased from 10 kPa to 2 kPa and a mixture of ethylene glycol and ethylene carbonate generated was distilled off.

Thereafter, the distillation was switched to simple distillation, and reaction was performed at 180°C with gradual reduction of pressure to 0.5 kPa for 5 hours and the monomers were distilled out to obtain a polycarbonate diol. Analysis results for the polycarbonate diol obtained are shown in Table 1. The polycarbonate polyol is referred to as PC10.

[Polymerization Example 11 for Polycarbonate Diol]

A polycarbonate diol was obtained through polymerization using the same equipment as in Polymerization Example 1 in the same manner as in Polymerization Example 1, except that 99 g (1.1 mol) of 1,4-butanediol and 378 g (3.2 mol) of 1,6-hexanediol were used. Analysis results for the polycarbonate polyol obtained are shown in Table 1. The polycarbonate diol is referred to as PC11.

[Polymerization Example 12 for Polycarbonate Diol]

A polycarbonate diol was obtained through polymerization using the same equipment as in Polymerization Example 1 in the same manner as in Polymerization Example 1, except that 306 g (3.4 mol) of 1,4-butanediol and 130 g (1.1 mol) of 1,6-hexanediol were used. Analysis results for the polycarbonate polyol obtained are shown in Table 1. The polycarbonate diol is referred to as PC12.

[Polymerization Example 13 for Polycarbonate Polyol]

A 1-L glass flask equipped with a rectifying column packed with regular packing materials and a stirring apparatus was charged with 423 g (4.8 mol) of ethylene carbonate, 250 g (2.4 mol) of 1,5-pentanediol, and 284 g (2.4 mol) of 1,6-hexanediol. Thereto, 0.09 g of titanium tetrabutoxide as a catalyst was added, and reaction was performed at a reaction temperature of 140 to 160°C for 12 hours while the pressure was decreased from 10 kPa to 2 kPa and a mixture of ethylene glycol and ethylene carbonate generated was distilled off.

Thereafter, the distillation was switched to simple distillation, and reaction was performed at 180°C with gradual reduction of pressure to 0.5 kPa for 5 hours and the monomers were distilled out to obtain a polycarbonate diol. Analysis results for the polycarbonate diol obtained are shown in Table 1. The polycarbonate polyol is referred to as PC13.

[Polymerization Example 14 for Polycarbonate Polyol]

A 1-L glass flask equipped with a rectifying column packed with regular packing materials and a stirring apparatus was charged with 423 g (4.8 mol) of ethylene carbonate, 250 g (2.4 mol) of 1,5-pentanediol, and 284 g (2.4 mol) of 1,6-hexanediol. Thereto, 0.09 g of titanium tetrabutoxide as a catalyst was added, and reaction was performed at a reaction temperature of 140 to 160°C for 12 hours while the pressure was decreased from 10 kPa to 2 kPa and a mixture of ethylene glycol and ethylene carbonate generated was distilled off.

Thereafter, the distillation was switched to simple distillation, and reaction was performed at 180°C with gradual reduction of pressure to 0.5 kPa for 3 hours and the monomers were distilled out to obtain a polycarbonate diol. Analysis results for the polycarbonate diol obtained are shown in Table 1. The polycarbonate polyol is referred to as PC14.

[Polymerization Example 15 for Polycarbonate Polyol]

A 1-L glass flask equipped with a rectifying column packed with regular packing materials and a stirring apparatus was charged with 423 g (4.8 mol) of ethylene carbonate, 250 g (2.4 mol) of 1,5-pentanediol, and 284 g (2.4 mol) of 1,6-hexanediol. Thereto, 0.09 g of titanium tetrabutoxide as a catalyst was added, and reaction was performed at a reaction temperature of 140 to 160°C for 12 hours while the pressure was decreased from 10 kPa to 2 kPa and a mixture of ethylene glycol and ethylene carbonate generated was distilled off.

Thereafter, the distillation was switched to simple distillation, and reaction was performed at 180°C with gradual reduction of pressure to 0.5 kPa for 10 hours and the monomers were distilled out to obtain a polycarbonate diol. Analysis results for the polycarbonate diol obtained are shown in Table 1. The polycarbonate polyol is referred to as PC15.

[Polymerization Example 16 for Polycarbonate Diol]

A 1-L glass flask equipped with a rectifying column packed with regular packing materials and a stirring apparatus was charged with 396 g (4.5 mol) of ethylene carbonate, 205 g (2.7 mol) of 1,3-propanediol, and 171 g (1.9 mol) of 1,4-butanediol. Thereto, 0.09 g of titanium tetrabutoxide as a catalyst was added, and reaction was performed at a reaction temperature of 140 to 160°C for 12 hours while the pressure was decreased from 10 kPa to 2 kPa and a mixture of ethylene glycol and ethylene carbonate generated was distilled off.

Thereafter, the distillation was switched to simple distillation, and reaction was performed at 180°C with gradual reduction of pressure to 0.5 kPa for 5 hours and the monomers were distilled out to obtain a polycarbonate diol. Analysis results for the polycarbonate diol obtained are shown in Table 1. The polycarbonate polyol is referred to as PC16.

[Table 1]

| | Composition of polycarbonate diol (mol%) | | | | | Hydroxyl number (mgKOH/g) | Number-average molecular weight (Mn) | Average number of methylene moieties (m) | Repeating units (n) | Carbonate group content (% by mass) | Polycarbonate diol obtained |
|---|---|---|---|---|---|---|---|---|---|---|---|
| | 1,4-BDO | 1,6-HDO | 1,5-PDO | 1,3-PDO | 1,10-DDO | | | | | | |
| Polymerization Example 1 | 31.0 | 69.0 | | | | 56.3 | 1993 | 5.38 | 13.90 | 41.86 | PC1 |
| Polymerization Example 2 | 41.0 | 59.0 | | | | 55.8 | 2011 | 5.18 | 14.35 | 42.83 | PC2 |
| Polymerization Example 3 | 51.0 | 49.0 | | | | 56.4 | 1989 | 4.98 | 14.52 | 43.80 | PC3 |
| Polymerization Example 4 | 61.0 | 39.0 | | | | 56.1 | 2000 | 4.78 | 14.95 | 44.84 | PC4 |
| Polymerization Example 5 | 51.0 | 49.0 | | | | 110.0 | 1020 | 4.98 | 7.05 | 41.51 | PC5 |
| Polymerization Example 6 | 48.0 | 52.0 | | | | 80.0 | 1403 | 5.04 | 9.93 | 42.49 | PC6 |
| Polymerization Example 7 | 50.0 | 50.0 | | | | 45.0 | 2493 | 5.00 | 18.36 | 44.19 | PC7 |
| Polymerization Example 8 | 50.0 | 50.0 | | | | 37.0 | 3032 | 5.00 | 22.50 | 44.53 | PC8 |
| Polymerization Example 9 | 53.0 | 37.0 | | | 10.0 | 56.4 | 1989 | 5.34 | 13.94 | 42.05 | PC9 |
| Polymerization Example 10 | | 60.0 | | 40.0 | | 56.4 | 1989 | 4.80 | 14.83 | 44.73 | PC10 |
| Polymerization Example 11 | 21.0 | 79.0 | | | | 56.2 | 1996 | 5.58 | 13.63 | 40.96 | PC11 |
| Polymerization Example 12 | 70.0 | 30.0 | | | | 56.4 | 1989 | 4.60 | 15.18 | 45.80 | PC12 |
| Polymerization Example 13 | | 49.0 | 51.0 | | | 55.9 | 2007 | 5.49 | 13.84 | 41.38 | PC13 |

(continued)

| | Composition of polycarbonate diol (mol%) | | | | | Hydroxyl number (mgKOH/g) | Number-average molecular weight (Mn) | Average number of methylene moieties (m) | Repeating units (n) | Carbonate group content (% by mass) | Polycarbonate diol obtained |
|---|---|---|---|---|---|---|---|---|---|---|---|
| | 1,4-BDO | 1,6-HDO | 1,5-PDO | 1,3-PDO | 1,10-DDO | | | | | | |
| Polymerization Example 14 | | 50.0 | 50.0 | | | 110.0 | 1020 | 5.50 | 6.63 | 38.99 | PC14 |
| Polymerization Example 15 | | 58.0 | 42.0 | | | 45.3 | 2477 | 5.58 | 17.10 | 41.43 | PC15 |
| Polymerization Example 16 | 48.0 | | | 52.0 | | 56.6 | 2020 | 3.48 | 17.80 | 52.88 | PC16 |

1,4-BDO: 1,4-butanediol
1,6-HDO: 1,6-hexanediol
1,5-PDO: 1,5-pentanediol
1,3-PDO: 1,3-propanediol
1,10-DDO: 1,10-decanediol

[Example 1]

A 500-mL separable flask equipped with a stirrer and sealed with nitrogen gas was charged with 15.74 g (0.06 mol) of 4,4'-methylenebiscyclohexyl diisocyanate (hydrogenated MDI, average number of isocyanate groups in one molecule: 2.0) and 100 g of N,N-dimethylformamide (DMF), and the mixture was warmed to 40°C to obtain a solution. To the flask, 40 g (0.02 mol) of polycarbonate polyol PC1 to which 140 g of N,N-dimethylformamide (DMF) and 0.0029 g of dibutyltin dilaurate as a catalyst had been added was added dropwise over 30 minutes while the solution was stirred. Reaction was performed at 50°C with stirring for 2 hours to obtain a prepolymer with terminal isocyanate. The temperature of the solution in the flask was decreased to room temperature, 6.8 g (0.04 mol) of isophoronediamine as a chain extender was then added thereto, and reaction was performed at room temperature for 1 hour. Thereafter, 0.5 g of ethanol as a reaction terminator was added thereto to obtain a DMF solution of polyurea resin (solid content: approximately 20% by mass). The thus-obtained N,N-dimethylformamide (DMF) solution with a polyurea resin solid content of 20% by mass was applied onto a glass sheet, and heated at 80°C for 2 hours to form a film of polyurea resin with a film thickness of 40 μm. The film was left to stand at room temperature for 24 hours, and thereafter subjected to evaluation of various physical properties. The evaluation results are shown in Table 2.

[Examples 2 to 10] (Example 10 for reference)

Films of polyurea resin were obtained in the same manner as in Example 1 except that each of PC2 to PC10 was used as a polycarbonate diol, and subjected to evaluation of various physical properties. The evaluation results are shown in Table 2.

[Comparative Examples 1 to 6]

Films of polyurea resin were obtained in the same manner as in Example 1 except that each of PC11 to PC16 was used as a polycarbonate diol, and subjected to evaluation of various physical properties. The evaluation results are shown in Table 2.

[Table 2]

| | Ex. 1 | Ex. 2 | Ex. 3 | Ex. 4 | Ex. 5 | Ex. 6 | Ex. 7 | Ex. 8 | Ex. 9 | Ex. 10* | Comp. Ex. 1 | Comp. Ex. 2 | Comp. Ex. 3 | Comp. Ex. 4 | Comp. Ex. 5 | Comp. Ex. 6 |
|---|---|---|---|---|---|---|---|---|---|---|---|---|---|---|---|---|
| Polycarbonate diol used | PC1 | PC2 | PC3 | PC4 | PC5 | PC6 | PC7 | PC8 | PC9 | PC10 | PC11 | PC12 | PC13 | PC14 | PC15 | PC 16 |
| <Tensile properties at room temperature> | | | | | | | | | | | | | | | | |
| Strength at break (MPa) | 25 | 29 | 30 | 22 | 24 | 33 | 21 | 20 | 22 | 21 | 19 | 28 | 19 | 17 | 17 | 20 |
| Elongation at break (%) | 480 | 460 | 450 | 420 | 400 | 430 | 500 | 520 | 460 | 410 | 480 | 410 | 500 | 410 | 550 | 300 |
| 100% modulus (MPa) | 2.5 | 2.8 | 3.0 | 3.4 | 3.8 | 3.5 | 2.3 | 1.8 | 2.9 | 3.6 | 2.0 | 4.2 | 2.0 | 3.8 | 1.8 | 5.3 |
| Chemical resistance (%) | 17 | 11 | 10 | 16 | 18 | 14 | 15 | 16 | 18 | 19 | 25 | 13 | 30 | 33 | 35 | 13 |
| Wear resistance (mass change: mg) | 2.9 | 2.5 | 2.3 | 3.5 | 3.3 | 2.8 | 3.0 | 3.3 | 3.5 | 3.6 | 4.5 | 2.8 | 5.1 | 5.5 | 5.9 | 3.6 |
| Low-temperature properties (glass transition temperature: °C) | -43 | -41 | -40 | -33 | -34 | -35 | -45 | -47 | -39 | -38 | -44 | -29 | -41 | -35 | -43 | -15 |

* Example 10 for reference

[Examples 11 to 15, Comparative Examples 7, 8]

Films of polyurea resin were obtained in the same manner as in Example 1 (the same amounts of usage in mole) except that PC3 was used as a polycarbonate diol and each of isocyanates and each of chain extenders listed in Table 3 were used, and subjected to evaluation of various physical properties. The evaluation results are shown in Table 3.

[Example 16]

Into a 1000-mL four-necked flask equipped with a stirrer, a condenser tube, a nitrogen-introducing tube, and a thermometer, 33.3 g (0.15 mol) of isophorone diisocyanate (IPDI, average number of isocyanate groups in one molecule: 2.0), 100 g (0.05 mol) of polycarbonate diol PC3, 6.7 g (0.05 mol) of 2,2-dimethylolpropionic acid (DMPA), 6.1 g (0.05 mol) of triethylamine (TEA), and 30 mL of methyl ethyl ketone (MEK) were added under a nitrogen atmosphere, and reacted at 80°C for 2.5 hours to obtain a solution of prepolymer with terminal isocyanate (NCO end). Subsequently, 342 g of deionized water was added thereto, and mixed with the solution of prepolymer at 35°C to obtain a dispersion solution of prepolymer. A solution containing 1.5 g (0.0025 mol) of ethylenediamine (EDA) as a chain extender in 2.0 g of deionized water was added to the dispersion solution of prepolymer, and the resultant was stirred at 30°C for 1 hour to obtain a mixture. The mixture obtained was subsequently heated to 80°C to remove MEK to obtain an aqueous polyurea dispersion with a solid content of 30% by mass. The aqueous polyurea dispersion obtained in a predetermined quantity was poured onto an aluminum pan, left to stand at room temperature for 24 hours, and then subjected to heat treatment at 80°C for 12 hours to form a film of polyurea resin with a film thickness of 40 μm. The film was left to stand at room temperature for 24 hours, and thereafter subjected to evaluation of various physical properties. The evaluation results are shown in Table 3.

[Comparative Example 9]

A film of polyurea resin was obtained in the same manner as in Example 16 except that PC14 was used as a polycarbonate diol, and subjected to evaluation of various physical properties. The evaluation results are shown in Table 3.

[Table 3]

| | Example 11 | Example 12 | Example 13 | Example 14 | Example 15 | Example 16 | Comparative Example 7 | Comparative Example 8 | Comparative Example 9 |
|---|---|---|---|---|---|---|---|---|---|
| Polycarbonate diol | PC3 | PC3 | PC3 | PC3 | PC3 | PC3 | PC3 | PC3 | PC14 |
| Organic polyisocyanate compound | IPDI | HDI | MDI | hydrogenated MDI | hydrogenated MDI | IPDI | hydrogenated MDI | TPA-100 | IPDI |
| Chain extender | IPDA | IPDA | IPDA | CHA | EDA | EDA | BDO | IPDA | EDA |
| <Tensile properties at room temperature> | | | | | | | | | |
| Strength at break (MPa) | 32 | 22 | 26 | 38 | 23 | 21 | 19 | 35 | 16 |
| Elongation at break (%) | 440 | 580 | 450 | 450 | 440 | 520 | 460 | 250 | 500 |
| 100% modulus (MPa) | 2.7 | 1.6 | 3.6 | 3.1 | 3.0 | 2.1 | 2.8 | 8.2 | 1.9 |
| Chemical resistance (%) | 12 | 19 | 18 | 9 | 20 | 18 | 26 | 20 | 29 |
| Wear resistance (mass change: mg) | 2.5 | 3.6 | 3.0 | 2.0 | 3.7 | 3.7 | 4.6 | 3.6 | 4.7 |
| Low-temperature properties (glass transition temperature: °C) | -41 | -40 | -40 | -42 | -40 | -42 | -35 | -30 | -38 |

IPDI: isophorone diisocyanate (average number of isocyanate groups in one molecule: 2.0)
HDI: hexamethylene diisocyanate (average number of isocyanate groups in one molecule: 2.0)
MDI: diphenylmethane-4,4'-diisocyanate (average number of isocyanate groups in one molecule: 2.0)
hydrogenated MDI: 4,4'-methylenebiscyclohexyl diisocyanate (average number of isocyanate groups in one molecule: 2.0)
IPDA: isophoronediamine
CHA 4,4'-methylenebis(cyclohexylamine)
EDA: ethylenediamine
BDO: 1,4-butanediol
TPA-100: curing agent of hexamethylene-diisocyanate-based isocyanurate type, manufactured by Asahi Kasei Chemicals Corporation, NCO content = 23.1% by mass, average number of isocyanate groups in one molecule: 3.0

Industrial Applicability

The polyurea resin of the present invention is superior in various physical properties, and hence can be used for injection-molded members (such as holding members, steering wheels, airbag covers, watch belts) and extruded products (such as hoses, tubes, sheets), and can be used in a state dissolved in a solvent for binders for synthetic leathers, skin materials, surface treatment agents, coating materials for fibers, various surface treatment agents, various adhesives, and so on.

## Claims

1. A polyurea resin as a reaction product of polyisocyanate compound (a), polycarbonate diol (b), and chain extender (c), wherein

    polyisocyanate compound (a) is an organic polyisocyanate compound having an average number of an isocyanate group in one molecule of 2.5 or less,
    polycarbonate diol (b) comprises repeating units each represented by the following formula (1) and a terminal hydroxyl group,
    a carbonate group content of one molecule of polycarbonate diol (b) is 41.5 to 45.7% by mass and a number-average molecular weight of polycarbonate diol (b) is 900 to 3100 g/mol, and
    chain extender (c) is a diamine:

    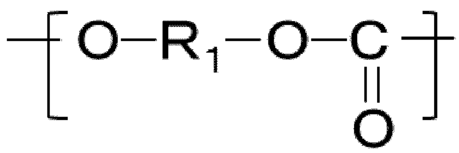 (1)

    wherein $R_1$ represents a divalent aliphatic or alicyclic hydrocarbon having 2 to 20 carbon atoms,
    **characterized in that**
    20 mol% or more of the repeating units each represented by formula (1) are each a repeating unit represented by formula (2), and 20 mol% or more of the repeating units each represented by formula (1) are each a repeating unit represented by formula (3):

    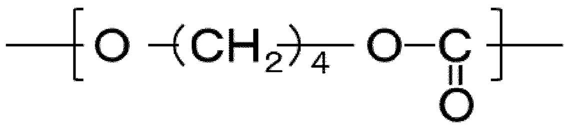 (2)

    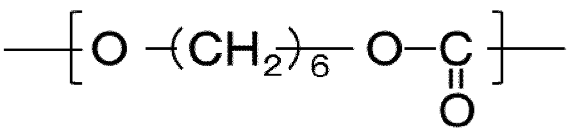 (3)

2. The polyurea resin according to claim 1, wherein the polyisocyanate compound (a) is an alicyclic polyisocyanate.

3. The polyurea resin according to claim 1 or 2, wherein the chain extender (c) is an alicyclic diamine.

4. A polyurea resin film having a thickness of 10 μm to 500 μm and obtained by forming the polyurea resin according to any one of claims 1 to 3 into a film.

5. A synthetic leather obtained by using the polyurea resin according to any one of claims 1 to 3.

## Patentansprüche

1. Polyharnstoffharz als Reaktionsprodukt von Polyisocyanatverbindung (a), Polycarbonatdiol (b) und Kettenverlängerer (c), wobei

die Polyisocyanatverbindung (a) eine organische Polyisocyanatverbindung mit einer durchschnittlichen Anzahl von 2,5 oder weniger Isocyanatgruppen in einem Molekül ist,
das Polycarbonatdiol (b) sich wiederholende Einheiten, die jeweils durch die folgende Formel (1) dargestellt werden, und eine endständige Hydroxylgruppe aufweisen, umfasst,
der Carbonatgruppengehalt eines Moleküls von Polycarbonatdiol (b) beträgt 41,5 bis 45,7 Massen-% ist und das zahlenmittlere Molekulargewicht des Polycarbonatdiols (b) von 900 bis 3100 g/mol beträgt, und
der Kettenverlängerer (c) ein Diamin ist:

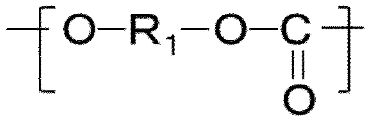 (1)

worin R1 einen zweibindigen aliphatischen oder alicyclischen Kohlenwasserstoff mit 2 bis 20 Kohlenstoffatomen darstellt,
**dadurch gekennzeichnet, dass**
20 Mol-% oder mehr der sich wiederholenden Einheiten, die jeweils durch Formel (1) dargestellt werden, jeweils eine sich wiederholende Einheit der Formel (2) sind, und 20 Mol-% oder mehr der sich wiederholenden Einheiten der Formel (1) jeweils eine sich wiederholende Einheit der Formel (3) sind:

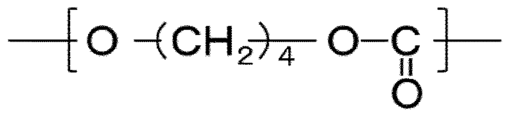 (2)

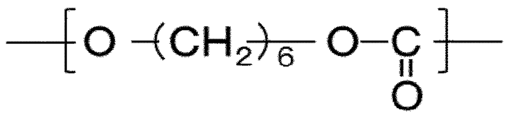 (3)

2. Polyharnstoffharz nach Anspruch 1, wobei die Polyisocyanatverbindung (a) ein alicyclisches Polyisocyanat ist.

3. Polyharnstoffharz nach Anspruch 1 oder 2, wobei der Kettenverlängerer (c) ein alicyclisches Diamin ist.

4. Polyharnstoffharzfilm/-folie mit einer Dicke von 10 μm bis 500 μm, der/die durch Formen des Polyharnstoffharzes nach einem der Ansprüche 1 bis 3 zu einem Film/einer Folie erhalten wurde.

5. Kunstleder, erhalten unter Verwendung des Polyharnstoffharzes nach einem der Ansprüche 1 bis 3.

## Revendications

1. Résine de polyurée en tant que produit de réaction d'un composé polyisocyanate (a), d'un polycarbonate diol (b) et d'un allongeur de chaîne (c), dans laquelle

le composé polyisocyanate (a) est un composé polyisocyanate organique ayant un nombre moyen d'un groupe isocyanate dans une molécule de 2,5 ou moins,
le polycarbonate diol (b) comprend des motifs répétitifs chacun représenté par la formule (1) suivante et un groupe hydroxyle terminal,
une teneur en groupes carbonate d'une molécule de polycarbonate diol (b) est de 41,5 à 45,7 % en masse et un poids moléculaire moyen en nombre du polycarbonate diol (b) est de 900 à 3 100 g/mol, et
l'allongeur de chaîne (c) est une diamine :

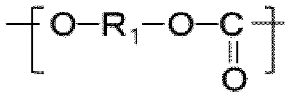 (1)

dans laquelle $R_1$ représente un hydrocarbure aliphatique ou alicyclique divalent ayant 2 à 20 atomes de carbone, **caractérisée en ce que** 20 % en moles ou plus des motifs répétitifs chacun représenté par la formule (1) sont chacun un motif répétitif représenté par la formule (2), et 20 % en moles ou plus des motifs répétitifs chacun représenté par la formule (1) sont chacun un motif répétitif représenté par la formule (3) :

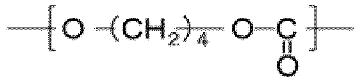 (2)

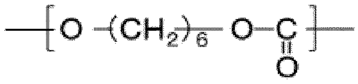 (3)

**2.** Résine de polyurée selon la revendication 1, dans laquelle le composé polyisocyanate (a) est un polyisocyanate alicyclique.

**3.** Résine de polyurée selon la revendication 1 ou 2, dans laquelle l'allongeur de chaîne (c) est une diamine alicyclique.

**4.** Film de résine de polyurée ayant une épaisseur de 10 µm à 500 µm et obtenu en mettant la résine de polyurée selon l'une quelconque des revendications 1 à 3 sous la forme d'un film.

**5.** Cuir synthétique obtenu en utilisant la résine de polyurée selon l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000095836 A
- JP 2001123112 A
- JP 5051428 A
- JP 6049166 A
- WO 2002070584 A
- US 2017073466 A1
- US 2015291724 A1


### Non-patent literature cited in the description


- **SCHNELL.** *Polymer Reviews,* 1994, vol. 9, 9-20
- **IMAI, YOSHIO.** Polyurethane Foam. The Society of Polymer Science, 1987, 12-23
- **IWATA, KEIJI.** Polyurethane Resin. Nikkan Kogyo Shimbun, Ltd, 1969, 23-32